# EUROPÄISCHE PATENTSCHRIFT

(11) **EP 2 535 276 B1**
(45) Veröffentlichungstag und Bekanntmachung des Hinweises auf die Patenterteilung: **30.07.2014**
(21) Anmeldenummer: 12004515.8
(22) Anmeldetag: 15.06.2012
(51) Int. Cl.: B64G 1/50, F28F 1/22, F28D 15/02

(54) **Raumfahrtsystem mit einer gekühlten Radiatorplatte**
Space system with a cooled radiator panel
Système spatial avec un panneau de radiateur refroidi

(30) Priorität: 16.06.2011 DE 102011106592
(43) Veröffentlichungstag der Anmeldung: 19.12.2012
(73) Patentinhaber: Astrium GmbH, 82024 Taufkirchen (DE)
(72) Erfinder: Stute, Thomas, 88697 Bermatingen (DE); Hauser, Josef, 88213 Ravensburg (DE); Kemper, Daniel, 88048 Friedrichshafen (DE)
(74) Vertreter: Avenhaus, Beate

(56) Entgegenhaltungen:
- EP-A1- 0 780 303
- DE-U1-202007 012 779
- US-A1- 2002 102 384

## Beschreibung

Die Erfindung betrifft ein Rahmfahrtsystem mit einer Radiatorplatte, auf der zur Abfuhr von Wärme zumindest ein Wärmerohr angeordnet ist, wobei die Radiatorplatte und das zumindest eine Wärmerohr aus Materialien mit unterschiedlichen Wärmeausdehnungskoeffizienten bestehen.

Bei im Weltraum betriebenen Systemen, wie z.B. Satelliten oder auf Satelliten angeordneten Instrumenten, treten Thermaldissipationen durch den Betrieb von elektrischen Komponenten des Systems auf. Werden diese Thermalenergieeinträge nicht abgeführt, steigt die Temperatur in dem Raumfahrtsystem bis hin zu einer Überhitzung. Aus diesem Grund werden die Thermaldissipationen über Radiatorplatten des Raumfahrtsystems nach außen abgeführt, siehe US 2002/0102384.

Zur Wärmeabfuhr werden typischerweise Wärmerohre aus einem Metall, insbesondere Aluminium, verwendet. Die Wärmerohre sind auch als Heatpipes bekannt. Für eine effiziente Wärmeabfuhr werden die Wärmerohre über eine möglichst große Weglänge mit der Radiatorplatte in Kontakt gebracht. Um einen guten Wärmeübergang zwischen dem Wärmerohr und der Radiatorplatte sicherzustellen, wird das Wärmerohr mit einem hohen Anpressdruck auf der Radiatorplatte angeordnet.

Bekannte Lösungen sehen vor, das Wärmerohr mit der Radiatorplatte zu verschrauben oder das Wärmerohr auf die Radiatorplatte aufzukleben. Die Befestigung hängt im Wesentlichen vom konstruktiven Aufbau der Radiatorplatte ab. Schraubverbindungen kommen insbesondere bei als Paneele ausgebildeten Radiatorplatten in Betracht. Ist die Radiatorplatte als sogenanntes Sandwich-Paneel ausgebildet, so ist das Wärmerohr zwischen zwei Schichten eingebettet, wobei dann eine Klebeverbindung bevorzugt ist.

Durch die beschriebenen Befestigungstechnologien sind die Wärmerohre steif mit der Radiatorplatte verbunden. Sofern die Materialien der Radiatorplatte und des

Wärmerohrs aneinander angepasst sind, ergeben sich keine Thermalspannungen. Als Deckschichten der Radiatorplatten werden in jüngerer Zeit bevorzugt kohlefaserverstärkte Kunststoffe (CFK) verwendet. Werden die Wärmerohre aus einem Metall, bevorzugt Aluminium, gebildet, so führen die unterschiedlichen Wärmeausdehnungen bei Temperaturänderungen zum Aufbau von thermalinduzierten Spannungen. Diese Spannungen können zum Ablösen der Wärmerohre von der Radiatorplatte und damit zur Unterbrechung der Wärmeabtransports führen. Hierdurch kann unter ungünstigen Umständen ein Versagen des Raumfahrtsystems die Folge sein.

Es ist daher Aufgabe der vorliegenden Erfindung, ein Raumfahrtsystem der oben bezeichneten Art anzugeben, welches das Problem von Thermalspannungen bei der Verwendung unterschiedlicher Materialien von Radiatorplatte und Wärmerohr nicht oder in stark verringertem Maße aufweist.

Diese Aufgabe wird gelöst durch ein Raumfahrtsystem mit den Merkmalen des Patentanspruchs 1. Vorteilhafte Ausgestaltungen sind in den abhängigen Ansprüchen wiedergegeben.

Die Erfindung schafft ein Raumfahrtsystem mit einer Radiatorplatte, auf der zur Abfuhr von Wärme zumindest ein Wärmerohr angeordnet ist, wobei die Radiatorplatte und das zumindest eine Wärmerohr aus Materialien mit unterschiedlichen Wärmeausdehnungskoeffizienten bestehen. Erfindungsgemäß liegt das zumindest eine Wärmerohr in axialer Richtung gleitfähig auf der Radiatorplatte auf und ist über eine Anzahl an Bügeln, welche an der Radiatorplatte befestigt sind, derart an dieser fixiert, dass das zumindest eine Wärmerohr zumindest bei gegebener Thermaldehnung an die Radiatorplatte gepresst wird.

Hierdurch wird ein Raumfahrtsystem geschaffen, bei dem die Wärmerohre auf einer Radiatorplatte so angebracht sind, dass sie einerseits ausreichend Kontakt zur Radiatorfläche zur Wärmeabfuhr haben und andererseits den Unterschied in der Thermaldehnung zwischen den beiden Komponenten durch Gleiten ausgleichen. Hierdurch können Wärmerohre aus Metall, insbesondere Aluminium, auch auf Radiatorplatten aus anderen Materialien eingesetzt werden. Insbesondere können die Radiatorplatten CFK-Strukturen, in Gestalt von Sandwich-Paneelen, monolithischen Strukturen, Radiatoren, usw. umfassen. Teure Entwicklungen von Wärmerohren aus anderen Metallen, die oftmals auch einen erheblichen Nachteil bezüglich eines erhöhten Gewichts oder einer schlechteren Wärmeleitung mit sich bringen, fallen damit weg.

Die Anzahl an Bügeln besteht bevorzugt aus dem gleichen Material wie die Radiatorplatte, um eine gleiche Wärmeausdehnung sicher zu stellen.

Gemäß einer zweckmäßigen Ausgestaltung ist zwischen dem zumindest einen Wärmerohr und der Radiatorplatte zumindest eine Wärme leitende Schicht angeordnet, welche bevorzugt auf die Radiatorplatte aufgebracht ist. Die Wärme leitende Schicht kann z.B. aus Sigrafil^{®} gebildet sein. Diese erlaubt einerseits ein sicheres Gleiten des Wärmerohrs gegenüber der Radialplatte bei einer Thermalspannung und stellt gleichzeitig eine gute thermische Anbindung zwischen den beiden Komponenten her.

In einer weiteren vorteilhaften Ausgestaltung ist zwischen dem zumindest einen Wärmerohr und der Anzahl an Bügeln zumindest in ihrem mechanischen Kontaktbereich zumindest eine Gleitschicht angeordnet, welche ein durch die Thermalspannung bedingtes Gleiten zwischen dem zumindest einen Wärmerohr und der Anzahl an Bügeln sicherstellt. Insbesondere ist hierbei vorgesehen, ein oder zwei übereinander angeordnete Gleitschichten vorzusehen. Eine jeweilige Gleitschicht kann aus PTFP-Folie, z.B. Teflon oder Ähnlichem, bestehen. Die zumindest eine Gleitschicht ist an der Außenseite des Wärmerohrs aufgebracht und liegt vorzugsweise lose zwischen dem Wärmerohr und dem zumindest einen Bügel. Die zumindest eine Gleitschicht sorgt trotz der durch die Anzahl an Bügeln aufgebrachten Haltekraft zuverlässig dafür, dass im Falle einer Thermalspannung ein Gleiten zwischen den beiden Komponenten ermöglichst ist.

In einer weiteren Ausgestaltung ist die Anzahl an Bügeln zumindest abschnittsweise kraftschlüssig, insbesondere über Schrauben oder Nieten, oder über eine Verklebung an der Radiatorplatte befestigt. Welche Art der Befestigung gewählt wird, hängt insbesondere vom konstruktiven Aufbau der Radiatorplatte ab. Grundsätzlich könnte die Befestigung auch auf andere Weise erfolgen.

In einer weiteren Ausgestaltung weist die Anzahl an Bügeln einen Hutförmigen Querschnitt auf. Unter einem Hutförmigen Querschnitt wird hierbei verstanden, dass ein Bügel mehrere Abschnitte aufweist, die das zugeordnete Wärmerohr umschließen. Ein zentraler (gerader oder leicht gekrümmter) Abschnitt liegt gegenüber der Radiatorplatte. Weitere, äußere Abschnitte verbinden den zentralen Abschnitt mit der Radiatorplatte. Die äußeren Abschnitte verlaufen zumindest abschnittsweise etwa parallel zueinander. Allgemein ist es zweckmäßig, wenn der Querschnitt der Anzahl an Bügeln angepasst ist an die Querschnittsform des zumindest einen Wärmerohrs. Hierdurch wird die sichere Fixierung, die letztendlich auch für einen guten Wärmeübergang sorgt, sichergestellt.

Die Anzahl an Bügeln besteht vorzugsweise aus Blech, Metall, Kunststoff, Faserverbundwerkstoff (CFK), Keramik oder einer Materialkombination der genannten Materialien.

In einer ersten Variante umfasst die Anzahl an Bügeln einen Bügel, der sich in axialer Richtung über die Länge des zumindest einen Wärmerohrs erstreckt. Der Bügel könnte auch aus mehreren Teilstücken bestehen, welche unmittelbar aneinander grenzen. Bei dieser Ausgestaltung ist das zumindest eine Wärmerohr entlang seines Verlaufs somit innerhalb des Bügels angeordnet. Hierdurch wird an jeder Stelle des Wärmerohrs sichergestellt, dass der mechanische Kontakt zu der Radiatorplatte gegeben ist. Hierdurch ergibt sich eine besonders homogene Wärmeabfuhr.

In einer zweiten Variante besteht die Anzahl an Bügeln aus durch Umformung oder durch Formgebung erzeugten Streifen, an welchen abschnittsweise fehlende Elemente ausgebildet sind oder welche abschnittsweise die federnden Elemente umfassen. Durch die federnden Elemente wird das zugeordnete Wärmerohr an die Radiatorplatte gedrückt. Die Druckbeaufschlagung erfolgt dabei sowohl bei vorliegender Thermalspannung als auch ohne Thermalspannung. Die Federelemente können aus dem Material der Bügel erzeugt sein, z.B. durch umgeformte Laschen oder in das Material, z.B. durch Prägung oder Ziehen, eingebrachte Vorsprünge.

In einer weiteren Ausgestaltung dieser Variante fixieren die streifenförmigen Bügel das zumindest eine Wärmerohr in vorgegebenen Abständen an der Radiatorplatte. Ein derart ausgebildetes Raumfahrtsystem weist den Vorteil auf, dass dieses mit lediglich geringem Gewicht bereitgestellt werden kann.

Obwohl das Wärmerohr prinzipiell aus einem beliebigen Material bestehen kann, ist es aus Gewichtsgründen sowie Gründen der Wärmeleitfähigkeit zweckmäßig, wenn das zumindest eine Wärmerohr aus Aluminium gebildet ist.

Es ist weiterhin vorgesehen, dass die Radiatorplatte zumindest eine Deckschicht aus CFK (Faserverbundwerkstoff) umfasst, auf welcher das zumindest eine Wärmerohr aufliegt. Insbesondere kann vorgesehen sein, dass die Materialien von Radiatorplatte und der Anzahl an Bügeln aneinander angepasst sind, so dass auch bei unterschiedlichen Temperaturen zwischen diesen beiden Komponenten keine Thermalspannung auftritt.

Die Erfindung wird nachfolgend näher anhand von Ausführungsbeispielen in der Zeichnung erläutert. Es zeigen:
- Fig. 1: eine perspektivische Darstellung eines Teils eines erfindungsgemäßen Raumfahrtsystems in einer ersten Ausführungsvariante,
- Fig. 2: einen Querschnitt durch das in Fig. 1 gezeigte Raumfahrtsystem,
- Fig. 3: eine perspektivische Darstellung des zur Fixierung eines Wärmerohrs verwendeten Bügels in Fig. 1,
- Fig. 4: eine perspektivische Darstellung eines Teils eines erfindungsgemäßen Raumfahrtsystems in einer zweiten Ausführungsvariante,
- Fig. 5: einen Querschnitt durch das in Fig. 4 gezeigte Raumfahrtsystem,
- Fig. 6: eine perspektivische Darstellung des zur Fixierung eines Wärmerohrs verwendeten Bügels in Fig. 4,
- Fig. 7: eine perspektivische Darstellung eines Teils eines erfindungsgemäßen Raumfahrtsystems in einer dritten Ausführungsvariante,
- Fig. 8: einen Querschnitt durch das in Fig. 7 gezeigte Raumfahrtsystem,
- Fig. 9: eine perspektivische Darstellung des zur Fixierung eines Wärmerohrs verwendeten Bügels in Fig. 7,
- Fig. 10: eine perspektivische Darstellung eines Teils eines erfindungsgemäßen Raumfahrtsystems in einer vierten Ausführungsvariante,
- Fig. 11: einen Querschnitt durch das in Fig. 10 gezeigte Raumfahrtsystem, und
- Fig. 12: eine perspektivische Darstellung des zur Fixierung eines Wärmerohrs verwendeten Bügels in Fig. 10.

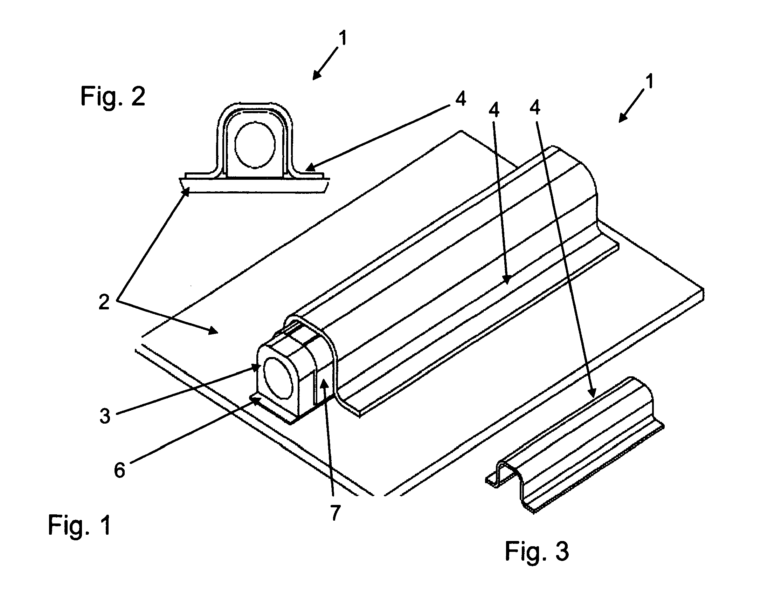

Fig. 1 zeigt in einer perspektivischen Darstellung einen Teil eines erfindungsgemäßen Raumfahrtsystems 1 gemäß einer ersten Ausführungsvariante. Dargestellt ist eine Radiatorplatte 2, auf der ein Wärmerohr 3 angeordnet ist. Während das Wärmerohr 3 beispielsweise aus Aluminium besteht, ist zumindest die dem Wärmerohr 3 zugeordnete Deckschicht der Radiatorplatte aus CFK gebildet. Das Wärmerohr 3 liegt auf der Radiatorplatte 2 lediglich auf und ist über einen Hutförmigen Bügel 4 an der Radiatorplatte 2 befestigt. Dabei ist das Wärmerohr 3 sowohl gegenüber der Radiatorplatte 2 als auch gegenüber dem Bügel 4 gleitfähig gelagert. Die Querschnittsgestalt des Bügels 4 ist dabei an die Querschnittsgestalt des Wärmerohrs 3 angepasst, wie besser aus der Querschnittsdarstellung der Fig. 2 hervorgeht.

Die Ausgestaltung des Bügels 4 kann ferner in der perspektivischen Darstellung der Fig. 3 ersehen werden. Der Bügel 4 erstreckt sich in der ersten Ausgestaltungsvariante in Axialrichtung des Wärmerohrs über dessen gesamte Länge. Bevorzugt ist der Bügel 4 über die gesamte axiale Länge des Wärmerohrs 3 einteilig ausgebildet. Gegebenenfalls könnte der Bügel 4 auch in mehrere Teilstücke unterteilt sein, welche dann jeweils aneinander grenzen.

Um die Wärmeanbindung des Wärmerohrs 3 an die Radiatorplatte 2 zu verbessern, ist zwischen diesen eine Wärme leitende Schicht 6 vorgesehen. Die Wärme leitende Schicht 6, welche beispielsweise aus einem gut Wärme leitenden Füllmaterial (z.B. Sigrafil^{®}) besteht, ist vorzugsweise auf der Radiatorplatte 2 aufgebracht.

Das Wärmerohr 3 ist darüber hinaus auf den drei freien Seiten (d.h. den dem Bügel 4 zugewandten Seiten) mit wenigstens einer Gleitschicht 7 bedeckt. Die Gleitschicht 7 kann eine PTFE-Folie, wie z.B. Teflon, sein. Die Gleitschicht 7 dient dazu, das Wärmerohr 3 gleitend von dem Bügel zu trennen. Die eine oder mehreren Gleitschichten 7 sind vorzugsweise lediglich zwischen das Wärmerohr 3 und den Bügel 6 eingelegt. Eine mechanische Fixierung mehrerer Gleitschichten 7 untereinander sowie der Gleitschicht(en) zu einer der beiden genannten Komponenten ist nicht vorgesehen.

Bei steigender Temperatur dehnen sich das Aluminium des Wärmerohrs 3 und die vorzugsweise darauf aufgebrachte PTFE-Folie stärker aus als der Bügel 4. Hierdurch wird das Wärmerohr 3 auf die Wärme leitende Schicht 6 gedrückt und verstärkt hierdurch den thermalen Kontakt zu der Radiatorplatte 2. Aufgrund der geringen Reibung der gegeneinander gleitfähigen Komponenten kann die Thermalspannung abgebaut werden. Gegeneinander gleitfähige Komponenten sind das Wärmerohr 3 und die daran angrenzende PTFE-Folie, die PTFE-Folien untereinander, die PTFE-Folie und der Bügel sowie das Wärmerohr und die Wärme leitende Schicht.

Bei sinkender Temperatur wird der thermale Kontakt schwächer. Dies ist jedoch unkritisch, da dann in dem Raumfahrtsystem kleinere Wärmeströme fließen.

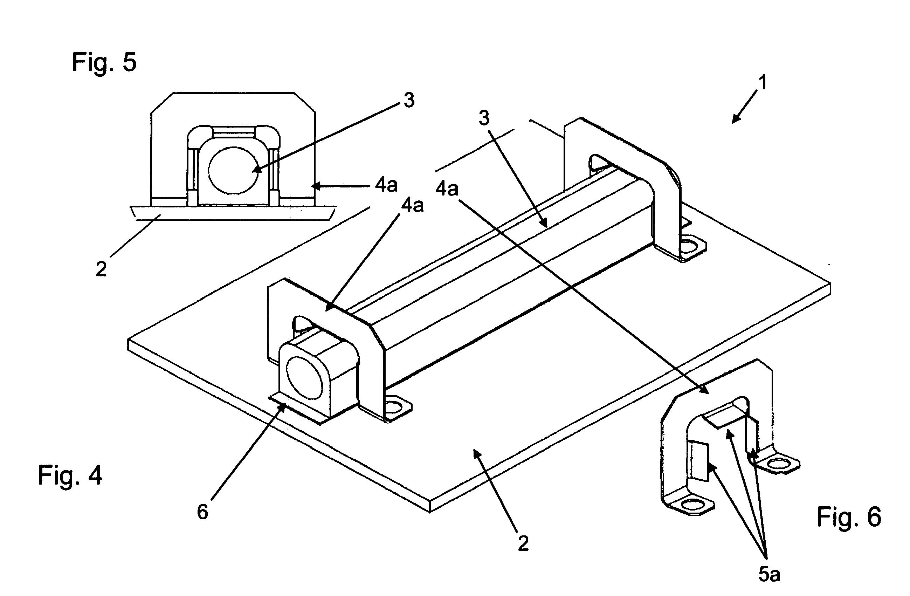

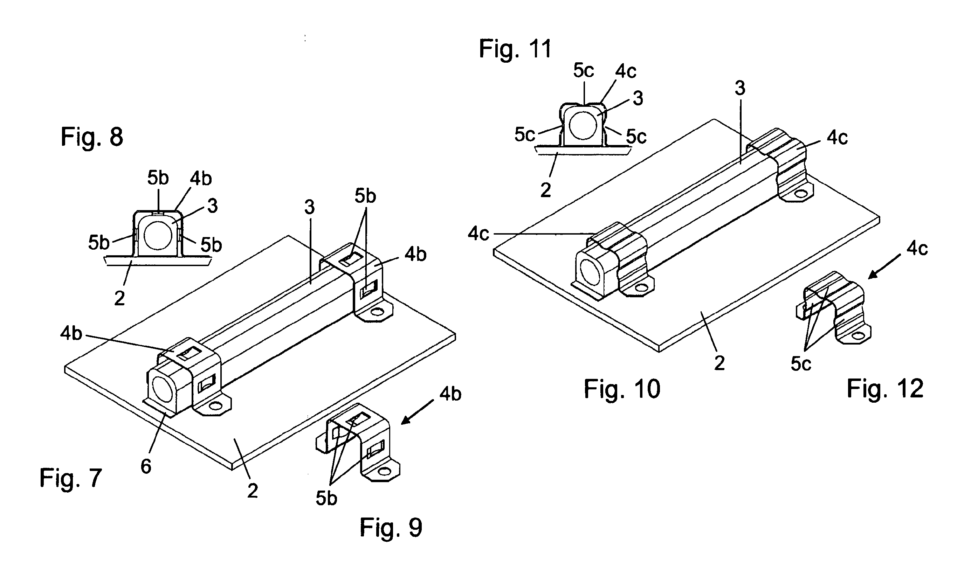

Die Figuren 4 bis 12 zeigen Ausführungsbeispiele einer zweiten Ausgestaltungsvariante eines erfindungsgemäßen Raumfahrtsystems. Den drei Ausgestaltungsvarianten ist gemeinsam, dass das Wärmerohr 3 auf der Radiatorplatte 2 aufliegt und durch eine Mehrzahl an beabstandet voneinander ausgebildeten Bügeln derart fixiert ist, dass ein thermaler Kontakt zur Radiatorplatte 3 besteht und ein axiales Gleiten des Wärmerohrs 3 gegenüber der Radiatorplatte 2 und den Bügeln 4a (zweite Ausgestaltungsvariante), 4b (dritte Ausgestaltungsvariante) und 4c (vierte Ausgestaltungsvariante) gegeben ist. Die drei Ausführungsbeispiele unterscheiden sich lediglich durch die Ausgestaltung der Bügel.

Wie im vorangegangenen Ausführungsbeispiel gemäß den Figuren 1 bis 3 kann der thermale Kontakt zwischen Wärmerohr 3 und Radiatorplatte 2 durch eine Wärme leitende Schicht 6 verbessert sein.

Die Bügel 4a, 4b, 4c bestehen beispielsweise aus umgeformten Streifen aus Metall, Kunststoff, Faserverbundstoff, Keramik oder einer Materialkombination davon. Die Bügel 4a, 4b, 4c können kostengünstig mittels Massenfertigungsverfahren hergestellt werden. Darüber hinaus weisen die in den Figuren 4 bis 12 dargestellten Ausführungsbeispiele den Vorteil eines geringen Gesamtgewichts auf. Die Bügel 4a, 4b, 4c sind mittels Schrauben oder Nieten abschnittsweise auf der Radiatorplatte 2 befestigt. Ebenso könnten die Bügel durch eine Klebung mit der Radiatorplatte 2 verbunden sein.

Die durch die Bügel 4a, 4b, 4c ausgebildeten Durchführungen für das Wärmerohr weisen an drei Abschnitten federnde Elemente 5a, 5b, 5c auf. Die federnden Elemente 5a, 5b, 5c können in Gestalt von ungebogenen Materialabschnitten (vgl. 5a in Fig. 6), sowie durch in die Bügel eingeprägte Materialabschnitte (vgl. Fig. 5b bzw. 5c) ausgebildet sein. Die Vorspannung der Federelemente sorgt für ausreichende Andruckkraft und ermöglicht auch bei wechselnden Temperaturen ein Gleiten oder einen Spannungsabbau des Wärmerohrs. Durch die bereits beschriebenen Reibungsvermindernden Beschichtungen 7 (PTFE-Folie) der Wärmerohre und/oder der Bügel 4a, 4b, 4c im Bereich der federnden Elemente 5a, 5b, 5c kann das Gleiten zwischen dem Wärmerohr 3 und den Bügeln 4a, 4b, 4c verbessert werden. Wie aus dieser Beschreibung ersichtlich ist, erfolgt ein mechanischer Kontakt zwischen dem Wärmerohr und den jeweiligen Bügeln 4a, 4b, 4c lediglich im Bereich der federnden Elemente.

Die in den Figuren dargestellten Klemmen-Varianten sind lediglich Ausführungsbeispiele, die in beliebiger Weise durch einen Fachmann abgeändert werden können, solange die beschriebene Funktion gewährleistet ist.

Das Funktionsprinzip der Ausführungsbeispiele der zweiten Ausgestaltungsvariante entspricht dem der ersten Ausgestaltungsvariante in den Figuren 1 bis 3. Bei steigender Temperatur dehnt sich das Aluminium des Wärmerohrs 3 stärker aus als die Bügel 4a, 4b, 4c, solange der Wärmeausdehnungskoeffizient des Aluminiums größer als der der Klemme ist. Hierdurch wird das Wärmerohr auf die Unterlage gedrückt und verstärkt den thermalen Kontakt zwischen Radiatorplatte 2 und Wärmerohr 3. Aufgrund der geringen Reibung zwischen dem Wärmerohr 3 und den federnden Elementen 5a, 5b, 5c der Bügel 4a, 4b, 4c sowie zwischen dem Wärmerohr 3 und der Radiatorplatte 2 kann ein axiales Gleiten stattfinden, was die Wärmespannungen abbaut.

Durch entsprechende Auslegung der federnden Elemente 5a, 5b, 5c kann die Anpresskraft nahezu konstant gehalten werden.

### Bezugszeichenliste

- 1: Raumfahrtsystem
- 2: Radiatorplatte
- 3: Wärmerohr
- 4: Bügel
- 4a, 4b, 4c: Bügel
- 5a, 5b, 5c: federndes Element
- 6: Wärme leitende Schicht
- 7: Gleitschicht

## Patentansprüche

1. Raumfahrtsystem (1) mit einer Radiatorplatte (2), auf der zur Abfuhr von Wärme zumindest ein Wärmerohr (3) angeordnet ist, wobei die Radiatorplatte (2) und das zumindest eine Wärmerohr (3) aus Materialien mit unterschiedlichen Wärmeausdehnungskoeffizienten bestehen, wobei das zumindest eine Wärmerohr (3) in Axialrichtung gleitfähig auf der Radiatorplatte (2) aufliegt, **dadurch gekennzeichnet, dass** das zumindest eine Wärmerohr (3) über eine Anzahl an Bügeln (4; 4a, 4b, 4c), welche an der Radiatorplatte (2) befestigt sind, derart an dieser fixiert ist, dass das zumindest eine Wärmerohr (3) zumindest bei gegebener Thermaldehnung an die Radiatorplatte (2) gepresst wird.

2. Raumfahrtsystem nach Anspruch 1, **dadurch gekennzeichnet, dass** zwischen dem zumindest einem Wärmerohr (3) und der Radiatorplatte (2) zumindest eine Wärmeleitende Schicht (6) angeordnet ist, welche bevorzugt auf die Radiatorplatte (2) aufgebracht ist.

3. Raumfahrtsystem nach Anspruch 1 oder 2, **dadurch gekennzeichnet, dass** zwischen dem zumindest einen Wärmerohr (3) und der Anzahl an Bügeln (4; 4a, 4b, 4c) zumindest in ihrem mechanischen Kontaktbereich zumindest eine Gleitschicht (7) angeordnet ist, welche ein durch die Thermalspannung bedingtes Gleiten zwischen dem zumindest einem Wärmerohr (3) und der Anzahl an Bügeln (4; 4a, 4b, 4c) sicherstellt.

4. Raumfahrtsystem nach einem der vorhergehenden Ansprüche, **dadurch gekennzeichnet, dass** die Anzahl an Bügeln (4; 4a, 4b, 4c) zumindest abschnittsweise kraftschlüssig, insbesondere über Schrauben oder Nieten, oder über eine Verklebung an der Radiatorplatte (2) befestigt ist.

5. Raumfahrtsystem nach einem der vorhergehenden Ansprüche, **dadurch gekennzeichnet, dass** die Anzahl an Bügeln (4; 4a, 4b, 4c) einen Hutförmigen Querschnitt aufweisen.

6. Raumfahrtsystem nach einem der vorhergehenden Ansprüche, **dadurch gekennzeichnet, dass** die Anzahl an Bügeln (4; 4a, 4b, 4c) aus Blech, Metall, Kunststoff, Faserverbundwerkstoff, Keramik oder einer Materialkombination der genannten Materialen besteht.

7. Raumfahrtsystem nach einem der Ansprüche 1 bis 6, **dadurch gekennzeichnet, dass** die Anzahl an Bügeln (4; 4a, 4b, 4c) einen Bügel umfasst, der sich in Axialrichtung über die Länge des zumindest einen Wärmerohres (3) erstreckt.

8. Raumfahrtsystem nach einem der Ansprüche 1 bis 6, **dadurch gekennzeichnet, dass** die Anzahl an Bügeln (4; 4a, 4b, 4c) aus durch Umformung oder Formgebung erzeugten Streifen besteht, an welchen abschnittsweise federnde Elemente (5a, 5b, 5c) ausgebildet sind oder welche abschnittsweise die federnden Elemente (5a, 5b, 5c) umfassen.

9. Raumfahrtsystem nach Anspruch 8, **dadurch gekennzeichnet, dass** die Streifenförmigen Bügel das zumindest eine Wärmerohr (3) in vorgegebenen Abständen an der Radiatorplatte (2) fixieren.

10. Raumfahrtsystem nach einem der vorhergehenden Ansprüche, **dadurch gekennzeichnet, dass** das zumindest eine Wärmerohr (3) aus Aluminium gebildet ist.

11. Raumfahrtsystem nach einem der vorhergehenden Ansprüche, **dadurch gekennzeichnet, dass** die Radiatorplatte (2) eine Deckschicht aus CFK umfasst, auf welcher das zumindest eine Wärmerohr (3) aufliegt.

12. Raumfahrtsystem nach einem der vorhergehenden Ansprüche, **dadurch gekennzeichnet, dass** die Anzahl an Bügeln (4, 4a, 4b, 4c) aus einem Material gebildet ist, das eine an die Radiotorplatte (2) angepasste Wärmeausdehnung aufweist.

## Claims

1. Space system (1) having a radiator panel (2) on which there is arranged at least one heat pipe (3) for the dissipation of heat, wherein the radiator panel (2) and the at least one heat pipe (3) consist of materials with different coefficients of thermal expansion, wherein the at least one heat pipe rests against the radiator panel (2) such that it is able to slide in the axial direction, **characterized in that** the at least one heat pipe (3) is secured to the radiator panel (2), by means of a number of clips (4; 4a, 4b, 4c) which are attached thereto, such that, at least for a given thermal expansion, the at least one heat pipe (3) is pressed against the radiator panel (2).

2. Space system according to Claim 1, **characterized in that**, between the at least one heat pipe (3) and the radiator panel (2), there is arranged at least one thermally conductive layer (6), which is preferably applied to the radiator panel (2).

3. Space system according to Claim 1 or 2, **characterized in that**, between the at least one heat pipe (3) and the number of clips (4; 4a, 4b, 4c), there is arranged, at least in their mechanical contact region, at least one sliding layer (7), which ensures sliding, caused by the thermal stress, between the at least one heat pipe (3) and the number of clips (4; 4a, 4b, 4c).

4. Space system according to one of the preceding claims, **characterized in that** the number of clips (4; 4a, 4b, 4c) are, at least in certain sections, attached to the radiator panel (2) force-fittingly, in particular by means of screws or rivets, or by bonding.

5. Space system according to one of the preceding claims, **characterized in that** the number of clips (4; 4a, 4b, 4c) have a hat-shaped cross section.

6. Space system according to one of the preceding claims, **characterized in that** the number of clips (4; 4a, 4b, 4c) consist of sheet metal, metal, plastic, fibre composite material, ceramic or a material combination of the aforementioned materials.

7. Space system according to one of Claims 1 to 6, **characterized in that** the number of clips (4; 4a, 4b, 4c) comprise a clip which extends in the axial direction over the length of the at least one heat pipe (3).

8. Space system according to one of Claims 1 to 6, **characterized in that** the number of clips (4; 4a, 4b, 4c) consist of strips produced by forming or by shaping, on which in certain sections resilient elements (5a, 5b, 5c) are formed or which in certain sections comprise the resilient elements (5a, 5b, 5c).

9. Space system according to Claim 8, **characterized in that** the strip-shaped clips secure the at least one heat pipe (3) to the radiator panel (2) at predefined intervals.

10. Space system according to one of the preceding claims, **characterized in that** the at least one heat pipe (3) is made of aluminium.

11. Space system according to one of the preceding claims, **characterized in that** the radiator panel (2) comprises a cover layer made of CFRP, against which the at least one heat pipe (3) rests.

12. Space system according to one of the preceding claims, **characterized in that** the number of clips (4, 4a, 4b, 4c) are made of a material having a thermal expansion matched to the radiator panel (2).

## Revendications

1. Système spatial (1) avec un panneau de radiateur (2) sur lequel est disposé au moins un tube échangeur de chaleur (3) pour l'évacuation de la chaleur, le panneau de radiateur (2) et l'au moins un tube échangeur de chaleur (3) se composant de matériaux ayant des coefficients de dilatation thermique différents, l'au moins un tube échangeur de chaleur (3) reposant sur le panneau de radiateur (2) de manière à pouvoir coulisser dans la direction axiale, **caractérisé en ce que** l'au moins un tube échangeur de chaleur (3) est attaché au panneau de radiateur (2) par le biais d'une pluralité de clips (4 ; 4a, 4b, 4c) fixés à ce dernier, de telle sorte que l'au moins un tube échangeur de chaleur (3) soit pressé contre le panneau de radiateur (2) au moins dans le cas d'une dilatation thermique donnée.

2. Système spatial selon la revendication 1, **caractérisé en ce qu'**entre l'au moins un tube échangeur de chaleur (3) et le panneau de radiateur (2) est disposée au moins une couche thermoconductrice (6) qui est de préférence appliquée sur le panneau de radiateur (2).

3. Système spatial selon la revendication 1 ou 2, **caractérisé en ce qu'**entre l'au moins un tube échangeur de chaleur (3) et la pluralité de clips (4 ; 4a, 4b, 4c) est disposée au moins dans leur région de contact mécanique au moins une couche de glissement (7), qui assure un glissement dû à la contrainte thermique entre l'au moins un tube échangeur de chaleur (3) et la pluralité de clips (4 ; 4a, 4b, 4c).

4. Système spatial selon l'une quelconque des revendications précédentes, **caractérisé en ce que** la pluralité de clips (4 ; 4a, 4b, 4c) est fixée au moins en partie par engagement par force, notamment par vissage ou rivetage, ou par le biais d'un collage sur le panneau de radiateur (2).

5. Système spatial selon l'une quelconque des revendications précédentes, **caractérisé en ce que** la pluralité de clips (4 ; 4a, 4b, 4c) présente une section transversale en forme de chapeau.

6. Système spatial selon l'une quelconque des revendications précédentes, **caractérisé en ce que** la pluralité de clips (4 ; 4a, 4b, 4c) se compose de tôle, de métal, de plastique, de matériau composite renforcé par des fibres, de céramique ou d'une combinaison desdits matériaux.

7. Système spatial selon l'une quelconque des revendications 1 à 6, **caractérisé en ce que** la pluralité de clips (4 ; 4a, 4b, 4c) comprend un clip qui s'étend dans la direction axiale sur la longueur de l'au moins un tube échangeur de chaleur (3).

8. Système spatial selon l'une quelconque des revendications 1 à 6, **caractérisé en ce que** la pluralité de clips (4 ; 4a, 4b, 4c) se compose de bandes produites par formage ou façonnage, sur lesquelles sont réalisés des éléments partiellement élastiques (5a, 5b, 5c) ou qui comprennent en partie les éléments élastiques (5a, 5b, 5c).

9. Système spatial selon la revendication 8, **caractérisé en ce que** les clips en forme de bandes fixent l'au moins un tube échangeur de chaleur (3) à intervalles prédéfinis sur le panneau de radiateur (2).

10. Système spatial selon l'une quelconque des revendications précédentes, **caractérisé en ce que** l'au moins un tube échangeur de chaleur (3) est formé d'aluminium.

11. Système spatial selon l'une quelconque des revendications précédentes, **caractérisé en ce que** le panneau de radiateur (2) comprend une couche de recouvrement en plastique renforcé de fibres de carbone, sur laquelle repose l'au moins un tube échangeur de chaleur (3).

12. Système spatial selon l'une quelconque des revendications précédentes, **caractérisé en ce que** la pluralité de clips (4 ; 4a, 4b, 4c) se compose d'un matériau qui présente une dilatation thermique adaptée au panneau de radiateur (2).
